# EUROPÄISCHE PATENTSCHRIFT

(11) **EP 4 571 570 B1**
(45) Veröffentlichungstag und Bekanntmachung des Hinweises auf die Patenterteilung: **03.12.2025**
(21) Anmeldenummer: 23215721.4
(22) Anmeldetag: 12.12.2023
(51) Int. Cl.: G06K 7/14

(54) **LESEN EINES OPTISCHEN CODES**
READING AN OPTICAL CODE
LECTURE D'UN CODE OPTIQUE

(43) Veröffentlichungstag der Anmeldung: 18.06.2025
(73) Patentinhaber: SICK AG, 79183 Waldkirch (DE)
(72) Erfinder: Zopf, Steffen, Waldkirch (DE); Schüler, Pascal, Teningen (DE)

(56) Entgegenhaltungen:
- EP-A1- 4 258 160
- EP-A2- 0 443 377

## Beschreibung

Die Erfindung betrifft ein Verfahren zum Lesen eines optischen Codes nach dem Oberbegriff von Anspruch 1 sowie einen optischen Codeleser.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbei gefördert. Ein scannender Codeleser erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Auch ein scannender Codeleser erfasst die Remission und damit letztlich Bildzeilen, die zu einem Objektbild zusammengefügt werden können, auch wenn hierfür in der Praxis ein Bildsensor vorgezogen wird. In einem solchen Objektbild können Codebereiche identifiziert und ein- oder zweidimensionale Codes ausgelesen werden.

Für einen Codeleser oder einen Lesetunnel stellt eine hohe Leserate eines der wichtigsten Qualitätskriterien dar. Lesefehler zwingen zu aufwändigen Fehlerbehebungen, wie dem erneuten manuellen Abscannen oder einer Nachsortierung. Die Ursache für solche Fehler kann in der Qualität des Codes selbst liegen, in einer ungünstigen Lesesituation beispielsweise mit einem Code unter einer Folie, die Reflektionen verursacht, und schließlich auch in Auswertungsfehlern etwa im Zuge einer Binarisierung von Grauwerten oder in Form von ungenau berechneten Abtastpositionen.

Um Lesefehler zu vermeiden, sind herkömmliche Decoder für zweidimensionale Codes wie DataMatrix, QR, Aztec, Maxicode, Dot-Code oder auch Stapelcodes wie PDF417 und MicroPDF mit einer Reed-Solomon-Korrektur ausgestattet. Das ermöglicht ein starkes Korrekturverfahren, mit dem selbst Codes mit großflächigeren Defekten noch richtig gelesen werden. So werden ansonsten nicht lesbare Codes (NoRead) doch noch gelesen und auch sogenannte Fehllesungen (MisRead) vermieden. Dabei wird ein Code falsch gelesen und dies nicht erkannt. Bei einer Reed-Solomon-Korrektur kommt das praktisch nicht vor. Wird deren Fehlerkapazität überschritten, kann der entsprechende Code einfach nicht mehr decodiert werden (NoRead).

Für Barcodes steht die Reed-Solomon-Korrektur nicht zur Verfügung. Dabei soll der Begriff Barcode als 1D-Strichcode verstanden werden, in der Literatur werden abweichend auch 2D-Codes bisweilen als Barcodes bezeichnet. Das Lesen eines Barcodes wird üblicherweise mittels einer Prüfsumme oder Checksumme verifiziert. Wenn die aus den gelesenen Nutzdaten errechnete Prüfsumme und die mitgelesene Prüfsumme übereinstimmen, wird von einer korrekten Decodierung ausgegangen. Eine Abweichung bedeutet, dass mindestens ein Zeichen in den Nutzdaten oder der Prüfsumme falsch gelesen wurde, und dies führt in der Regel zu einem Lesefehler (NoRead).

Es ist möglich, über die Prüfsumme ein einzelnes nicht decodierbares oder defektes Nutzzeichen zu korrigieren, d.h. in einer Art Invertierung des Prüfsummenverfahrens das betroffene Nutzzeichen im Nachhinein auf einen Wert zu setzen, mit dem dann die aus den Nutzdaten errechnete Prüfsumme mit der gelesenen Prüfsumme übereinstimmt. Diese Form der Korrektur ist auf ein Einzelzeichen beschränkt und für großflächiger beeinträchtigte Codes nicht anwendbar. Es bleibt dann bei einem Lesefehler (NoRead).

Da eine Prüfsumme nur Einzelfehler abfängt, ist die herkömmliche Korrektur für Barcodes anfällig in Situationen mit Mehrfachfehlern. In der Praxis ist es aber gar nicht ungewöhnlich, dass ein Code an mehreren Stellen beeinträchtigt ist. Beispiele sind stark gewellte Untergründe bei flexiblen Verpackungen wie Tüten, teilweise in eine Kartonage-Falz geklebte Barcodeetiketten oder Barcodes unter Folie mit starken Reflektionen mit vielen lokalen, flächigen Defekten.

In der EP 3 428 835 B1 wird ein Verfahren zum Lesen eines optischen Codes vorgestellt, bei dem in einer Vorkorrektur an mindestens einer Position des Codes ein Codewort durch ein für diese Position bekanntes Codewort ersetzt wird. Die bekannten Codewörter sind parametriert, von einer Datenbank eines übergeordneten Systems vorgegeben oder aus einer Historie von gelesenen Codes eingelernt.

Die EP 4 258 160 A1 erweitert diesen Gedanken und führt sogenannte Schemata ein. In einem Schema sind Erwartungen an häufig vorkommende Codekonstellationen formalisiert, beispielsweise als reguläre Ausdrücke. Dabei gibt es einen Fixanteil analog EP 3 428 835 B, der einer in vielen Codes wiederkehrenden festen Abfolge von Zeichen entspricht, sowie einen variablen Anteil, der allgemeinere Regeln erfasst, wie dass an bestimmten Positionen nur Ziffern oder nur Buchstaben vorkommen. Schemata können verwendet werden, um eine aus einem optischen Code gelesene Botschaft als falsch gelesen zu erkennen oder sie zu korrigieren.

Es treten dabei jedoch in der Praxis Fälle auf, in denen die Korrektur mittels Schemata nicht in der richtigen Botschaft mündet oder sogar in eine ursprünglich richtig gelesene Botschaft erst durch die Korrektur ein Fehler eingeführt wird. Dadurch entstehen dann doch wieder Fehllesungen (MisReads).

Es ist daher Aufgabe der Erfindung, das Codelesen mit Korrektur aus einem Schema weiter zu verbessern.

Diese Aufgabe wird durch ein Verfahren zum Lesen eines optischen Codes und einen optischen Codeleser nach Anspruch 1 beziehungsweise 8 gelöst. Vorsorglich sei klargestellt, dass es sich um ein automatisch ablaufendes, insbesondere computerimplementiertes Verfahren handelt. Der optische Code enthält eine Botschaft, das ist derjenige Klartext, der durch den optischen Code vermittelt werden soll und darin codiert ist. Die Botschaft weist eine Zeichenkette mit einer Vielzahl von Zeichen auf. Sie enthält neben den Nutzzeichen einen Prüfcode mit mindestens einem Prüfzeichen, beispielsweise eine Prüfsumme (Checksumme), die erster Prüfcode genannt wird, um sie von einem später eingeführten zweiten Prüfcode zu unterscheiden. Um den Code und damit die Botschaft zu lesen, werden zunächst auf einem der bekannten und einleitend beschriebenen Wege Bilddaten mit dem optischen Code aufgenommen. In den Bilddaten werden dann vorzugsweise durch eine Vorverarbeitung Codebereiche aufgefunden, welche die Bilddaten beispielsweise anhand des Kontrasts segmentiert, und der jeweilige Code in den Codebereichen wird decodiert und dadurch die Botschaft samt dem ersten Prüfcode gelesen.

Die gelesenen Zeichen der Botschaft werden mit einem Schema verglichen, vorzugsweise wiederholt mit mehreren Schemata. Das Schema erwartet an mehreren Positionen der Botschaft ein bestimmtes Zeichen. Durch Vergleich der gelesenen Zeichen der Botschaft an diesen Positionen mit den Zeichen des Schemas wird festgestellt, ob das Schema zu der Botschaft passt. Dazu muss für einen Mindestanteil der durch das Schema erwarteten Zeichen eine Übereinstimmung mit den gelesenen Zeichen der Botschaft vorliegen, beispielsweise für mindestens zwei, mindestens drei, mindestens vier oder noch mehr Zeichen oder für einen Mindestanteil der aus dem Schema erwarteten Zeichen wie mindestens ein Drittel oder mindestens die Hälfte. Ist das der Fall, so werden Zeichen des Schemas in die gelesene Botschaft übernommen, vorzugsweise alle durch das Schema erwarteten Zeichen. Dabei kommt es nicht auf die konkrete Implementierung dieses Überschreibens an, es können beispielsweise gezielt nur zwischen Schema und gelesener Botschaft abweichende Zeichen übertragen werden, oder es überschreiben einfach alle durch das Schema festgelegten Zeichen die entsprechenden Positionen der gelesenen Botschaft. Bis hierhin ist das Verfahren angelehnt an die EP 3 428 835 B1 und die EP 4 258 160 A1, auf die ergänzend für weitere Details und mögliche Ausgestaltungen verwiesen wird.

Die Erfindung geht von dem Grundgedanken aus, nach einer Korrektur der gelesenen Botschaft mittels eines Schemas einen zweiten Prüfcode zu bestimmen. Das geschieht nach den Regeln des Codetyps des zu lesenden optischen Codes, mit denen auch ursprünglich der in dem optischen Code enthaltene erste Prüfcode berechnet wurde. Der zweite Prüfcode prüft somit die mit dem Schema korrigierte Botschaft, nicht wie für einen Prüfcode üblich die ursprüngliche gelesene Botschaft. Stimmen erster Prüfcode und zweiter Prüfcode überein, so ist die mit dem Schema korrigierte Botschaft validiert. Die Reaktion auf die Validierung oder Nicht-Validierung kann verschieden sein, beispielsweise wird ein entsprechendes Flag als Zusatzinformation mit der Botschaft ausgegeben, oder im Falle, dass nicht validiert werden kann, wird die gelesene Botschaft gar nicht erst ausgegeben, als Lesefehler gemeldet, oder es werden daraufhin noch weitere Decodierversuche unternommen.

Die Erfindung hat den Vorteil, dass anhand des zweiten Prüfcodes festgestellt oder validiert werden kann, ob die Korrektur auf Basis des Schemas erfolgreich war. Sie könnte, wie einleitend schon erläutert, unzureichend gewesen sein oder sogar eine ursprünglich richtig gelesene Botschaft verfälschen. Schlägt die Validierung fehlt, so wird der Lesefehler zumindest aufgedeckt und nicht eine falsche Botschaft unerkannt als richtig weiterverarbeitet. Alternativ wird die ursprüngliche gelesene Botschaft als Ergebnis des Codelesens weitergegeben, die gescheiterte Korrektur mit dem Schema damit effektiv zurückgenommen. Da nun eine Validierungsmöglichkeit besteht, können umfangreichere Korrekturen mit einem Schema gewagt werden, so dass womöglich noch stärker beschädigte optische Codes lesbar werden. Besonders wenn es viele Schemata gibt, kann es passieren, dass mehrere Schemata zu einer gelesenen Botschaft passen, und auch für diesen Fall kann die Validierung aushelfen und die richtige Auswahl treffen. Insgesamt treten so weniger Lesefehler auf, die Leserate verbessert sich.

Der erste Prüfcode wird bevorzugt als richtig gelesen angesehen, wenn der erste Prüfcode innerhalb eines zulässigen Wertebereichs liegt, bei redundanter mehrfacher Lesung zumindest mehrheitlich derselbe erste Prüfcode resultiert und/oder wenn direkt benachbarte Zeichen des Prüfcodes gelesen wurden. Da die Validierung auf dem ersten Prüfcode basiert, ist besonders wichtig, dass der erste Prüfcode stimmt. Ein Fehler bei der Erfassung des ersten Prüfcodes könnte zu einer Fehlvalidierung führen und sollte deshalb so gut wie möglich ausgeschlossen werden. Dazu werden verschiedene Prüfungsschritte vorgeschlagen, die einzeln oder in beliebigen Kombinationen eingesetzt werden können. Der Prüfcode sollte innerhalb eines zulässigen Wertebereichs liegen. Es ist üblich, dass ein Code redundant mehrfach gelesen wird. Dabei wird dann aber die resultierende Botschaft betrachtet, nicht mehr der individuelle Prüfcode eines jeweiligen Leseversuchs. Nach diese Ausführungsform hingegen wird verlangt, dass der Prüfcode selbst zumindest in der Mehrzahl der Leseversuche und vorzugsweise in allen Leseversuchen übereinstimmt. Ferner können die direkt benachbarten Zeichen des Prüfcodes überprüft werden, ob sie verlässlich erfasst sind, insbesondere in einer redundanten Mehrfachlesung mehrheitlich oder stets als gleiches Zeichen. Aufgrund der Korrekturmechanismen ist durchaus denkbar, dass die benachbarten Zeichen rekonstruiert wurden, hier geht es darum, ob sie selbst direkt lesbar waren, denn wenn das der Fall ist, dann ist der Bereich des Prüfcodes mit hoher Wahrscheinlichkeit ebenfalls nicht beschädigt oder aus anderen Gründen unleserlich. Das nachfolgende Zeichen ist regelmäßig ein Stoppzeichen.

Die Botschaft wird vorzugsweise zunächst in Rohwerten aus optischen Elementen des optischen Codes gelesen, wobei dann die Rohwerte anhand eines Codierungsschemas eines Codetyps in die Zeichen der Botschaft konvertiert werden. Die Rohwerte sind Zahlenwerte, die sich aus den Codeelementen oder insbesondere Balken und Lücken des optischen Codes ergeben. Jeder Codetyp hat aber darüber hinaus ein Codierungsschema oder Alphabet, mit dem diese Rohwerte interpretiert werden. Beispielsweise wird einem Rohwert ein bestimmtes ASCII-Zeichen zugeordnet, wofür beispielsweise eine Nachschlagtabelle angelegt sein kann. Erst mit dieser Konvertierung entsteht die eigentliche Botschaft als Klartext. Die Schemata enthalten vorzugsweise keine Rohwerte, sondern interpretierbare Zeichen wie einen ASCII-Text, so dass durch die Konvertierung Botschaft und Schemata auf einer gleichen und intuitiv besser erfassbaren Ebene des Klartextes arbeiten.

Zur Bestimmung des zweiten Prüfcodes werden bevorzugt die Zeichen der Botschaft mit ihren aus einem Schema übernommenen Zeichen in Rohwerte konvertiert. Prüfcodes werden üblicherweise auf Ebene von Rohwerten berechnet. Daher kann aus einem Schema oder einer Botschaft, die mit einem Schema korrigiert wurde, auf Ebene von konvertierten Zeichen oder des Klartextes der zweite Prüfcode nicht sinnvoll bestimmt werden. Zuvor wird vielmehr nach dieser Ausführungsform die korrigierte Botschaft wieder in Rohwerte übersetzt, in einer Umkehrung der Konvertierung des Vorabsatzes nun für die korrigierte Botschaft. Dazu kann die Nachschlagtabelle der ursprünglichen Konvertierung in umgekehrter Leserichtung verwendet werden. Aus Implementierungsgründen kann es sinnvoll sein, eine neu geordnete inverse Nachschlagtabelle zu verwenden.

Vorzugsweise werden Steuerzeichen der gelesenen Rohwerte in der Bestimmung des zweiten Prüfcodes berücksichtigt. Im Vorabsatz wurde die Problematik diskutiert, dass ein zweiter Prüfcode den ersten Prüfcode selbst im fehlerfreien Fall nicht reproduziert, wenn der zweite Prüfcode aus Klartext berechnet wird. Überdies sind in dem Klartext aber womöglich noch unsichtbare Zeichen oder Steuerzeichen der ursprünglichen Rohwerte verloren gegangen, die jedoch in den ersten Prüfcode eingegangen sind. Deshalb werden solche Steuerzeichen in dieser Ausführungsform zwischengepuffert und bei Rückkonvertierung der korrigierten Botschaft in Rohwerte positionsrichtig berücksichtigt, so dass die Steuerzeichen in mit dem ersten Prüfcode vergleichbarer Weise in den zweiten Prüfcode einfließen.

Vorzugsweise wird für mehrere Schemata geprüft, ob ein Mindestanteil der Zeichen des Schemas in der Botschaft wiedergefunden wird, wobei für jedes Schema, auf das dies zutrifft, probeweise Zeichen des Schemas in die Botschaft übernommen werden und zu der so korrigierten Botschaft ein zweiter Prüfcode bestimmt wird, und wobei dasjenige Schema und diejenige damit korrigierte Botschaft als validiert angesehen wird, deren zweiter Prüfcode mit dem ersten Prüfcode übereinstimmt. Es gibt hier also mindestens zwei oder sogar einen ganzen Pool potentiell passender Schemata, die auf eine gelesene Botschaft angewandt werden können. Ein Kriterium für das richtige Schema ist, dass dessen erwartete Zeichen in möglichst hohem Maße zu den Zeichen der Botschaft passen. Die Erfindung ermöglicht nun ein weiteres, sehr trennscharfes Kriterium, nämlich ob nach der Korrektur mit einem Schema der passende zweite Prüfcode berechnet wird. Auf die Korrektur mit einem solchen Schema kann mit hoher Verlässlichkeit vertraut werden.

Für den Fall, dass der zweite Prüfcode für mehr als ein Schema mit dem ersten Prüfcode übereinstimmt, wird die Botschaft vorzugsweise nicht als validiert angesehen. Es ist nicht besonders wahrscheinlich, aber doch möglich, dass die Korrektur der Botschaft mit zwei unterschiedlichen Schemata durch eine Fehleranhäufung jeweils zum richtigen zweiten Prüfcode führt. In solchen Ausnahmefällen kann es sinnvoll sein, die korrigierte Botschaft doch wieder als Lesefehler zu behandeln, da zumindest eine der beiden Korrekturen nicht stimmen kann. Alternativ können die betroffenen korrigierten Botschaften ausgegeben und entsprechen markiert werden. Durch übergeordnete, beispielsweise inhaltliche Kriterien ist womöglich im Nachgang doch noch entscheidbar, welche Botschaft die richtige ist, oder es wird auf diesem Wege eine manuelle Auswahl mit nur zwei oder wenigen Kandidaten statt einer vollständigen Nachbearbeitung ganz ohne Codeinformation ermöglicht. Zu beachten ist noch, dass zwei unterschiedliche Schemata zufällig dieselbe korrigierte Botschaft erzeugen können, dieser Sonderfall sollte vorzugsweise abgefangen werden, weil dies natürlich auch eine ordnungsgemäße Validierung darstellt.

Schemata wurden bisher nur durch bekannte Zeichen an festen Positionen eingeführt. Das ist das, was in der EP 4 258 160 A1 als fixe Zeichen oder Fixanteil bezeichnet ist. Ein Schema kann darüber hinaus einen variablen Anteil aufweisen, der nun noch beschrieben wird. Sämtliche auf den variablen Anteil bezogenen Merkmale sind optional. Für weitere Details wird nochmals auf die EP4 258 160 A1 verwiesen. Ein variabler Anteil bedeutet, dass das Schema für mindestens eine Position der Botschaft ein variables Zeichen enthält, das in zu lesenden Codes an dieser Position erwartet wird, wobei ein variables Zeichen auf einen Teilbereich der möglichen Zeichen, nicht aber ein fixes Zeichen festgelegt ist. Typische Beispiele für ein variables Zeichen sind Ziffern oder Buchstaben. Der Vergleich der gelesenen Zeichen der Botschaft mit dem Schema schließt vorzugsweise den variablen Anteil ein. Wird dabei an einer Position eines variablen Zeichens ein Zeichen der Botschaft gelesen, das nicht dem Schema entspricht, so ist dies ein Indikator, dass dieses Schema nicht zu der gelesenen Botschaft passt. Beispielsweise wird an einer Position, an der laut Schema ein Buchstabe stehen müsste, eine Ziffer gelesen. Dann wird vorzugsweise ein anderes Schema verwendet, auf die Korrektur mit diesem Schema verzichtet oder die fehlende Passung jedenfalls als weiteres Bewertungskriterium der Validierung vermerkt. Gemäß ihrer Definition schließen fixe Zeichen und variable Zeichen einander aus, folglich sind ihre jeweiligen Positionen gemäß dem Schema verschieden.

Das Schema weist bevorzugt eine Codelänge auf und/oder enthält für jede Position ein fixes Zeichen oder ein variables Zeichen. Zu dem Schema gehört somit die Information der Codelänge, der Gesamtzahl an Zeichen der Botschaft. Das Schema ist vorzugsweise vollständig, für jede Position der Botschaft ist also aus dem Schema bekannt, welches fixe Zeichen dort steht beziehungsweise welcher Teilbereich möglicher Zeichen dort als variables Zeichen möglich ist. In dieser Vollständigkeit steckt implizit die Codelänge, die aber dennoch zusätzlich ein expliziter Parameter des Schemas sein kann. Ein Schema kann auch unvollständig sein, es gibt dann mindestens ein völlig freies Zeichen in den Grenzen der grundsätzlichen Codespezifikation. Das kann insbesondere ein vorübergehender Zustand während eines Einlernens eines Schemas sein.

An einer Position eines variablen Zeichens wird bevorzugt ein nicht in den Teilbereich der für das variable Zeichen möglichen Zeichen fallendes oder ein nicht lesbares Zeichen mittels der Prüfsumme korrigiert und das Ergebnis nur als korrekt gelesene Botschaft akzeptiert, wenn das korrigierte Zeichen in den Teilbereich der für das variable Zeichen möglichen Zeichen fällt. Hier erfolgt im variablen Anteil eine Korrektur anhand der Prüfsumme. Einleitend wurde erläutert, dass dies nur für Einzelfehler möglich ist und im Falle von Mehrfachfehlern zusätzliche Fehllesungen (MisRead) erzeugt werden können. Die Prüfsumme kann grundsätzlich nur entweder die Integrität der Botschaft verifizieren oder zur Korrektur herangezogen werden, weil die Korrektur letztlich die Integrität mit der Prüfsumme erzwingt. Das Schema ermöglicht hier eine zusätzliche Absicherung, denn die korrigierte Botschaft muss immer noch das Schema erfüllen. Dadurch wird zumindest ein Teil der zusätzlichen Fehllesungen abgefangen.

Vorzugsweise wird eine Botschaft, deren Länge nicht mit der Codelänge des Schemas übereinstimmt oder die an einer Position eines variablen Zeichens ein Zeichen aufweist, das nicht in den Teilbereich der für das variable Zeichen möglichen Zeichen fällt, als Fehllesung eingestuft.. Die Codelänge und die Vorgaben des Schemas hinsichtlich variabler Zeichen ermöglichen, Fehllesungen im Mehrfachfehlerfall wenigstens teilweise noch aufzudecken.

Ein Schema weist bevorzugt mindestens einen der folgenden Teilbereiche der möglichen Zeichen eines variablen Zeichens auf: nicht druckbare Zeichen, Sonderzeichen, Ziffern, Buchstaben, Kleinbuchstaben, Großbuchstaben. Das sind besonders geeignete Beispiele für Unterteilungen oder Klassen der in einer Botschaft denkbaren Zeichen. Im Prinzip könnte die Unterteilung ganz willkürlich erfolgen. Derartige semantische Klassen erleichtern aber dem Benutzer das Verständnis, so dass die Anwendung leichter diagnostiziert und optimiert werden kann. Zudem sind Regelmäßigkeiten in Codes in der Praxis ebenfalls eher in Form semantischer Klassen als beliebige Unterteilungen zu finden. Häufig sind die möglichen Zeichen eines Codes durch die Zahlen 0..127 des ASCII-Codes repräsentiert. Die genannten Teilbereiche können im ASCII-Code wiedergefunden werden.

Ein Schema wird bevorzug als regulärer Ausdruck formuliert, der für die jeweiligen Positionen die zulässigen Zeichen angibt. Ein regulärer Ausdruck erleichtert es dem Benutzer, das Schema zu verstehen und gegebenenfalls zu editieren. Zugleich wird die interne Verarbeitung erleichtert und die Fehleranfälligkeit beim Programmieren der Decoder verringert. Alternativ ist eine proprietäre Definition von Schemata vorstellbar, die aber vorzugsweise die Übersichtlichkeit und formale Regelmäßigkeit regulärer Ausdrücke zumindest annähernd erreicht.

Zum Einlernen eines Schemas wird vorzugsweise eine Vielzahl gelesener Botschaften ausgewertet, wobei insbesondere die gelesenen Botschaften im Betrieb erfasst oder aus einem Logfile geladen werden. Zwar wäre grundsätzlich denkbar, ein Schema unmittelbar vorzugeben, sei es durch Parametrierung in einer insbesondere grafischen Benutzerschnittstelle oder durch Einlesen mittels Datenträger oder Netzwerk. Für die Diagnose oder Verbesserung von Schemata ist das durchaus von Vorteil. In dieser Ausführungsform ist aber ein automatisches Einlernen vorgesehen, das den Benutzer von dieser Aufgabe befreit. Das Einlernen basiert auf gelesenen Botschaften, die vorzugsweise aus dem laufenden oder einem früheren Betrieb stammen können, insbesondere einem Logfile. Denkbar ist weiterhin eine Anpassung von Schemata während des Betriebs. Es ist von Vorteil, wenn bekannt ist, dass die Botschaften, aus denen das Schema eingelernt wird, korrekt gelesene Botschaften sind. Vorzugsweise werden zudem nur Leseergebnisse verwendet, die von Anfang an korrekt gelesen wurden, insbesondere keine Korrektur aus der Prüfsumme erfahren haben. Beispielsweise durch statistische Verfahren ließe sich aber aus gelesenen Botschaften selbst dann ein Schema ableiten, wenn in einigen Botschaften Zeichen fehlen und/oder einige Botschaften falsche Zeichen enthalten. Beim Einlernen findet vorzugsweise eine Sortierung der gelesenen Botschaften statt, damit nur Codes aus einer Codefamilie Eingang finden beziehungsweise mehrere Schemata für mehrere Codefamilien eingelernt werden können. Kriterien für die Sortierung können die Codelänge, aber auch Teile der Schemata selbst sein, insbesondere unterschiedliche Fixanteile. Es kann also im Laufe des Einlernens vorkommen, dass aus einem Schema aufgrund von Unterschieden im Fixanteil zwei oder mehr Schemata gebildet werden.

Ein Schema wird bevorzugt aus einer Verteilung gelesener Zeichen an den jeweiligen Positionen der gelesenen Botschaft eingelernt. Es wird demnach festgestellt, welche Zeichen an den jeweiligen Positionen der Botschaft vorkommen. Es kann zudem gezählt werden, wie oft ein Zeichen an der jeweiligen Position gelesen wurde.

Vorzugsweise wird an Positionen, an denen immer das gleiche Zeichen gelesen wird, das entsprechende fixe Zeichen eingelernt, und an Positionen, an denen verschiedene Zeichen gelesen werden, wird der davon gebildete Teilbereich als variables Zeichen eingelernt. Ein immer wieder gleich an einer Position gelesenes Zeichen wird damit dem Fixanteil des Schemas zugeschlagen. Es können dabei zusätzliche Vorgaben gemacht werden, etwa dass der Fixanteil einen Block benachbarter Zeichen bildet oder am Anfang oder Ende der Botschaft steht. Variieren an einer Position die gelesenen Zeichen, so wird der davon aufgespannte Teilbereich als variables Zeichen des Schemas angesehen. Dieser Teilbereich kann gegebenenfalls noch erweitert werden, um einen besonderen Teilbereich in Gänze abzudecken. Wurden beispielsweise an einer Position die Zeichen 1, 3, 6 gelesen, dann kann der Teilbereich je nach Ausführungsform genau aus diesen Zeichen {1, 3, 6} bestehen, aus der ganzen Spanne {1, 2, 3, 4, 5, 6} zwischen den gelesenen kleinsten und größten Zeichen 1, 6 unter Einschluss auch der nicht gelesenen Zeichen 2, 4, 5 oder aus der vollständigen Klasse der Ziffern. Wenn an einer Position praktisch beliebige, zufällige Zeichen gelesen wurden, dann kann für das Schema hier weder ein Fixanteil noch ein nützlicher variabler Anteil eingelernt werden.

Es verbleibt eine Freistelle im Schema, ein variables Zeichen praktisch ohne Einschränkung, oder das Einlernen wird abgebrochen. Weiterhin kann versucht werden, eine Teilmenge der gelesenen Botschaften zu finden, in denen Ausreißer eliminiert sind, die diese Situation herbeigeführt haben. Die Ausreißer können ausgegeben werden, damit der Benutzer eine Möglichkeit hat zu prüfen, ob es berechtigt ist, diese gelesenen Botschaften in dem Schema nicht zu berücksichtigen.

Ein Schema wird bevorzugt zunächst mit leeren Bereichen je Position initialisiert, das jeweilige erste an einer Position gelesene Zeichen wird für diese Position gespeichert, und jedes an einer Position nach dem ersten Zeichen für diese Position gelesene Zeichen, das für diese Position noch unbekannt war, erweitert den Teilbereich für diese Position so, dass das gelesene Zeichen umfasst ist. Dies ist eine vorteilhafte Implementierung des Einlernens von Schemata. Dabei wird wie immer vorzugsweise sortiert, so dass die gelesenen Botschaften, aus denen das jeweilige Schema eingelernt wird, derselben Codefamilie zugehören. Initialisiert wird ein leeres Schema, das zunächst für keine Position Vorwissen kennt. Ein jeweils an einer Position gelesenes Zeichen wird zunächst als fixes Zeichen des Schemas betrachtet. Das sollte sich dann aber über die weiteren gelesenen Botschaften bestätigen. Es kann auch verlangt werden, dass ein fixes Zeichen mindestens m-mal oder m-aus-n-mal gelesen wurde. Wird an einer Position ein anderes Zeichen gelesen, so kann dies gemäß einem m-aus-n-Kriterium als Ausreißer betrachtet werden. Vorzugsweise spannen aber die bisher an dieser Position gelesenen Zeichen den Teilbereich eines variablen Zeichens auf. Mit jedem neuen gelesenen Zeichen an einer Position eines variablen Zeichens kann sich der Teilbereich erweitern. Vorzugsweise sollte der Teilbereich auf eine Klasse beschränkt bleiben, wie Ziffern oder Buchstaben, ansonsten sind ein besonders großer Teilbereich beziehungsweise eine Fehlermeldung des Einlernens denkbar, weil an dieser Position keine Regelmäßigkeit oder Systematik erkennbar ist, die sich in einem Schema sinnvoll erfassen lässt.

In bevorzugter Weiterbildung ist ein optoelektronischer Codeleser mit mindestens einem Lichtempfangselement zur Erzeugung von Bilddaten aus Empfangslicht und mit einer internen und/oder externen Steuer- und Auswertungseinheit vorgesehen, in der ein erfindungsgemäßes Verfahren zum Lesen von optischen Codes implementiert ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung eines Codelesers, der beispielhaft über einem Förderband montiert ist, auf dem Objekte mit zu lesenden optischen Codes gefördert werden;
- Fig. 2: ein Beispiel für eine Korrektur eines gelesenen Codes mittels eines Schemas, die einen Fehler erzeugt;
- Fig. 3: ein Beispiel für eine Korrektur eines gelesenen Codes mittels eines Schemas, die einen Fehler nicht behebt;
- Fig. 4: eine Tabelle zur Konvertierung von Rohwerten in Klartext am Beispiel des Typs Code128;
- Fig. 5: eine beispielhafte Berechnung des Prüfcodes für eine Botschaft eines Codes des Typs Code128;
- Fig. 6: ein beispielhaftes Ablaufdiagramm zur Korrektur mittels Schemata und Validierung der korrigierten Botschaften durch einen Prüfcode; und
- Fig. 7: ein konkretes Beispiel eines gelesenen Codes zur Veranschaulichung der Korrektur und Validierung mittels Schemata.

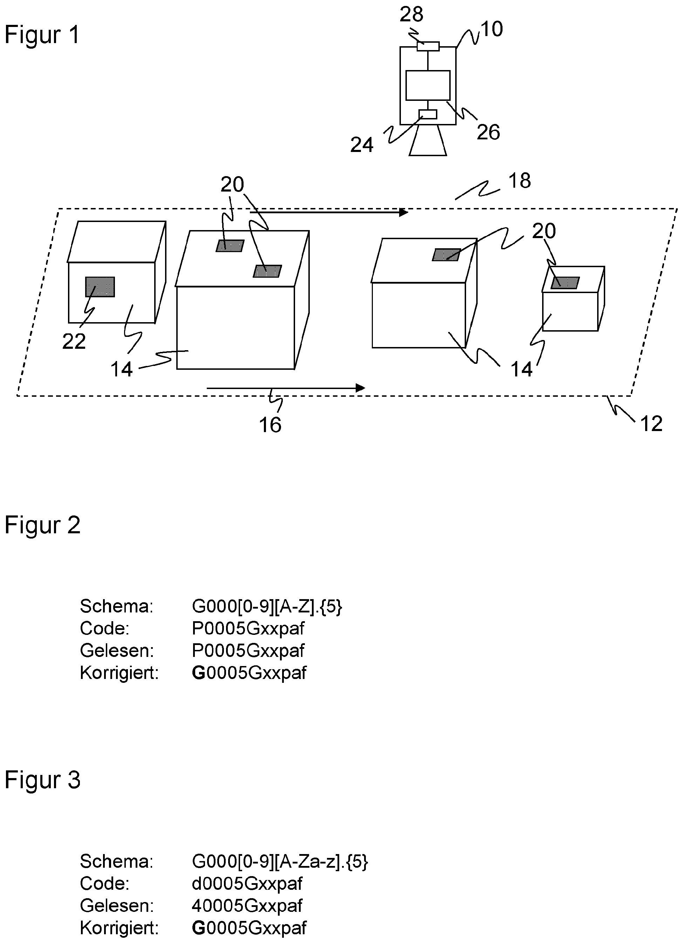

Figur 1 zeigt einen optoelektronischen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber auf das Lesen von Codes beziehungsweise den Codeleser 10 selbst, so dass dieses Beispiel nicht einschränkend verstanden werden darf. Beispielsweise können Codes auch von Hand abgescannt, oder es kann in einer Präsentationsanwendung ein Code oder ein Objekt 14 mit einem Code in das Lesefeld des Codelesers 10 gehalten werden.

Der Codeleser 10 erfasst mit einem Lichtempfänger 24 Bilddaten der geförderten Objekte 14 und der Codebereiche 20, die von einer Steuer- und Auswertungseinheit 26 mittels Bildauswertung und Decodierverfahren weiterverarbeitet werden. Die Steuer- und Auswertungseinheit 26 umfasst beispielsweise mindestens einen Rechenbaustein wie einen Mikroprozessor oder eine CPU (Central Processing Unit), ein FPGA (Field Programmable Gate Array), einen DSP (Digital Signal Processor), ein ASIC (Application-Specific Integrated Circuit), einen Kl-Prozessor, eine NPU (Neural Processing Unit), eine GPU (Graphics Processing Unit), eine VPU (Video Processing Unit) oder dergleichen. Es kommt ferner für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, und die Steuer- und Auswertungseinheit fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die zentrale Funktion des Codelesers 10 ist das Decodieren, d.h. das Lesen der in einem optischen Code codierten Botschaft als Klartext. Die Botschaft ist eine Zeichenkette aus Nutzzeichen vorzugsweise mit mindestens einem Prüfzeichen, das typischerweise am Ende steht. Über eine Schnittstelle 28 gibt der Codeleser 10 Informationen aus, wie aus den Codes gelesene Botschaften oder Bilddaten.

Nachstehend wird unter Bezugnahme auf die Figuren 2 bis 7 eine Korrektur der jeweils aus einem Code gelesenen Botschaft und deren Validierung erläutert. Vorzugsweise erfolgt dies in der Steuer- und Auswertungseinheit 26. Ebenso ist aber denkbar, Bilddaten oder Zwischenergebnisse über die Schnittstelle 28 auszugeben und zumindest einen Teil der Decodierung, Korrektur und/oder Validierung in ein übergeordnetes System auszulagern, wie einen Steuerungsrechner, ein Netzwerk oder eine Cloud. Vorverarbeitungen der Bilddaten zur Segmentierung und zum Auffinden von Codebereichen 20 sowie die Decodierung an sich werden als bekannt vorausgesetzt und nicht beschrieben.

Figur 2 zeigt ein Beispiel für eine Korrektur eines gelesenen Codes mittels eines Schemas, die einen Fehler erzeugt. In der ersten Zeile ist ein beispielhaftes Schema gezeigt, das vorgegeben oder auf eine der einleitend erläuterten Weisen eingelernt worden ist. Gemäß der hier dem Schema zugrundeliegenden Konvention werden als die ersten vier Zeichen "G000" erwartet, was dem Fixanteil des Schemas entspricht. Darauf folgen als variabler Anteil eine Ziffer, dann ein Großbuchstabe und dann noch fünf beliebige Zeichen. Andere denkbare Schemata umfassen einen Fixanteil mit mehr oder weniger Zeichen, zusammenhängend oder verteilt am Anfang, Ende oder mitten in dem Schema sowie keinen oder einen anderen variablen Anteil und sonstige Variationen. Die syntaktische Konvention ist ebenfalls rein beispielhaft, die Vorgaben an Fixanteil und/oder variablen Anteil können auf beliebige Weise notiert werden. Zu den möglichen Ausgestaltungen eines Schemas und dessen Anwendung auf einen Code wird nochmals ergänzend auf die EP 4 258 160 A1 verwiesen.

Der tatsächliche Code in der zweiten Zeile (ground truth) wurde in dem Beispiel der Figur 2 gemäß der dritten Zeile ursprünglich schon korrekt gelesen. Bei dem Vergleich mit der Schablone genügen aber die drei Nullen im Anfangsteil "P000" gegenüber "G000", dass mehr als die Hälfte des Fixanteils der Schablone auf den gelesenen Code passt. Deshalb wird die Schablone zur Korrektur herangezogen, und deren Fixanteil überschreibt nun die ersten vier Zeichen des gelesenen Codes. Der korrigierte Code in der dritten Zeile weist nun in seinem ursprünglich richtig gelesenen ersten Zeichen einen Fehler auf. Das Beispiel ist vereinfacht, womöglich hätte an dem gelesenen Code in der zweiten Zeile anhand des Prüfcodes oder anderer Kriterien schon erkannt werden können, dass keine Schemata mehr angewandt werden sollten. Es geht hier nur um eine Erläuterung des Prinzips.

Figur 3 zeigt ein zweites Beispiel für eine fehlgeschlagene Korrektur eines gelesenen Codes mittels eines Schemas, die in diesem Fall keinen Fehler in einen bereits richtig gelesenen Code einführt, sondern einen Fehler beim Lesen des Codes nicht behebt. Die Anordnung der vier Zeilen ist analog der Figur 2. In diesem Fall ist aber der gelesene Code in Zeile 3 in seinem ersten Zeichen fehlerhaft. Das angewandte Schema mit den führenden Zeichen "G000" ist aber nur scheinbar durch Übereinstimmung in den drei Nullen das passende Schema, so dass das fehlerhafte erste Zeichen "4" mit einem ebenfalls fehlerhaften "G" statt dem richtigen "d" überschrieben wird.

In beiden Beispielen wird eine Fehllesung (MisRead) unter der irrigen Annahme einer erfolgreichen Korrektur erzeugt. Das wird durch die nun zu erläuternde erfindungsgemäße Validierung der korrigierten Botschaften verhindert. Grundlage der Validierung ist der gelesene Prüfcode oder die Prüfziffer des optischen Codes, der zur begrifflichen Unterscheidbarkeit als erster Prüfcode bezeichnet wird. Es wird dann ein zweiter Prüfcode aus der korrigierten Botschaft berechnet, der für eine erfolgreiche Validierung mit dem ersten Prüfcode übereinstimmen muss. Das Berechnen des zweiten Prüfcodes ist aber nicht so einfach, wie es auf den ersten Blick scheint, da die korrigierte Botschaft im Klartext zumindest für zahlreiche Codetypen eine unzureichende Grundlage bildet.

Das liegt daran, dass die Codeelemente des optischen Codes zunächst nur für Rohwerte stehen, die dann je nach Typ des Codes über dessen Codierungsschema oder Alphabet in den Klartext der Botschaft übersetzt werden. Um das näher zu betrachten, wird im Folgenden ohne Beschränkung der Allgemeinheit das Beispiel von Code128 herangezogen. Andere Barcodes oder 1D-Codes verwenden ihre eigenen Alphabete, was aber an dem Grundprinzip nichts ändert. Für 2D-Codes stehen mächtigere Korrekturen zur Verfügung, wie einleitend kurz beschrieben, dennoch ist die Anwendung der Erfindung mit ihren Schemata, einer darauf basierenden Korrektur und deren Validierung durch Prüfcodes auch hier denkbar.

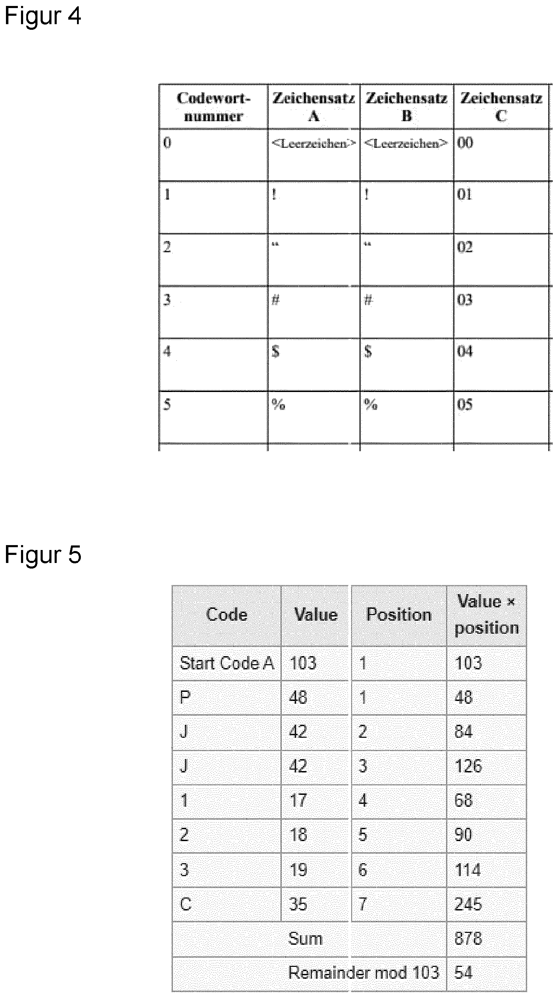

Figur 4 zeigt den Anfang einer Tabelle zur Konvertierung von Rohwerten in Klartext am gewählten Beispiel des Typs Code128. Es gibt hier sogar drei Alphabete oder Zeichensätze, zwischen denen durch ein Steuerzeichen auch noch innerhalb eines Codes umgeschaltet werden kann. Die Tabelle zeigt in der ersten Spalte die Rohwerte, auch als Referenzcodewörter oder Codewortnummern bezeichnet, und in den weiteren Spalten die einem jeweiligen Rohwert durch die Zeichensätze A-C zugeordneten Nutzzeichen oder Klartextzeichen.

Figur 5 zeigt eine beispielhafte Berechnung des Prüfcodes für eine Botschaft eines Codes des Typs Code128. Der Prüfcode wird als gewichtete Summe der Rohwerten modulo 103 berechnet. Die Gewichtung beginnt bei eins und erhöht sich nach dem Startzeichen jeweils um eins, Start- und sonstige Steuerzeichen gehen mit in den Prüfcode ein. Die Tabelle zeigt dies für das Beispiel "PJJ123C" mit einem Startzeichen für den Zeichensatz A.

Um also einen vergleichbaren zweiten Prüfcode zu berechnen, muss die Codierung rückgängig gemacht werden, wofür die Tabelle der Figur 4 in umgekehrter Leserichtung herangezogen werden kann. Dabei müssen Start- und sonstige Steuerzeichen zwischengespeichert und positionsrichtig eingefügt werden. Sie sind in dem Klartext, im Beispiel "PJJ123C", nicht mehr enthalten, tragen aber zu dem Prüfcode bei.

Eine weitere Voraussetzung für die Validierung ist, dass der Prüfcode richtig gelesen wurde. Um dem Prüfcode vertrauen zu können, werden daran deshalb vorzugsweise einige Bedingungen einzeln oder in Kombination gestellt. Zunächst sollte der Wert des Prüfcodes zulässig sein, beispielsweise können modulo 103 nur gültige Werte kleiner 103 entstehen. Weiter werden Codes in der Regel mehrfach gelesen, somit auch der Prüfcode, und es kann verlangt werden, dass dabei mehrheitlich oder besser noch stets derselbe Prüfcode gelesen wurde. Weiterhin sollte das Stop-Zeichen keine Defekte aufweisen und auch nicht mit einem nachträglichen Mechanismus korrigiert worden sein. Das Stop-Zeichen wird deshalb herangezogen, weil es jedenfalls bei den meisten Codetypen der nachfolgende Nachbar des Prüfcodes ist. Auf gleiche Weise kann der vorangehende Nachbar geprüft werden. Wenn die Nachbarschaft des Prüfcodes keine Fehler aufweist, ist es unwahrscheinlich, dass der Prüfcode selbst beschädigt oder aus sonstigen Gründen falsch gelesen ist.

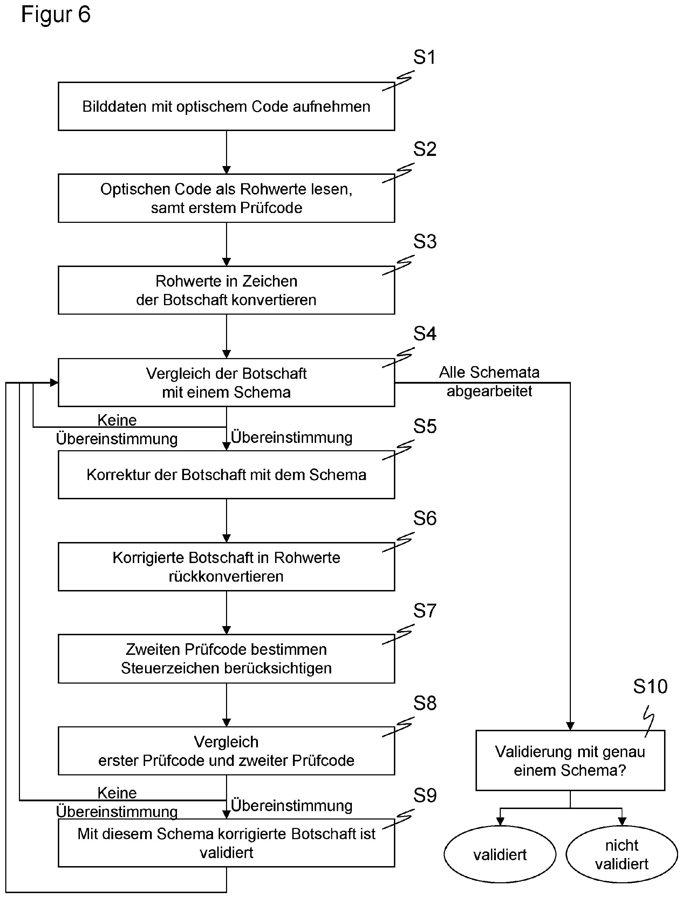

Figur 6 zeigt ein beispielhaftes Ablaufdiagramm zur Korrektur mittels Schemata und Validierung der korrigierten Botschaften durch einen Prüfcode. Je nach Ausführungsform werden alle Schritte oder nur einige Schritte ausgeführt. In einem Schritt S1 werden Bilddaten mit einem optischen Code aufgenommen. In einem Schritt S2 wird der optische Code zunächst in Form von Rohwerten gelesen, im selben Zuge wird auch der erste Prüfcode erfasst. In einem Schritt S3 wird jedenfalls für die meisten Codetypen der Rohwert anhand eines Codierungsschemas, wie in Figur 4 beispielhaft für Code128 gezeigt, in ein Nutzzeichen oder in Klartext konvertiert.

In einem Schritt S4 wird die gelesene Botschaft mit einem Schema verglichen. Es kann eine Vielzahl von Schemata in Frage kommen, die dann alle oder in einer Teilauswahl nacheinander entsprechend den aufwärts gerichteten Pfeilen auf der linken Seite der Figur 6 für den Vergleich herangezogen werden. Bei dem Vergleich wird geprüft, ob sich in der Botschaft ein Mindestanteil an Zeichen aus dem Schema wiederfinden, wie zu Figur 2 an einem Beispiel erläutert. Ist das nicht der Fall, wird das nächste Schema probiert. Im Falle einer Übereinstimmung wird die Botschaft in einem Schritt S5 mit dem Schema korrigiert. Es überschreiben dabei die fixen Zeichen des Schemas die entsprechenden Zeichen der Botschaft.

Für die nun folgende Validierung wird die korrigierte Botschaft in einem Schritt S6 in Rohwerte rückkonvertiert. Das ist erforderlich, sofern in Schritt S3 die Botschaft aus Rohwerten in Klartext konvertiert wurde, weil der gelesene erste Prüfcode auf Rohwerten basiert und nur so Vergleichbarkeit entsteht. Für die Rückkonvertierung kann die Tabelle aus Schritt S3 in umgekehrter Leserichtung verwendet werden. In einem Schritt S7 wird aus der rückkonvertierten korrigierten Botschaft der zweite Prüfcode bestimmt. Dabei sind noch positionsrichtig die Steuerzeichen aus der gelesenen Botschaft zu berücksichtigen, wie im Zusammenhang mit Figur 5 erläutert.

In einem Schritt S8 werden erster Prüfcode und zweiter Prüfcode miteinander verglichen. Bei fehlender Übereinstimmung ist die Validierung gescheitert, und es wird im Schritt S4 das nächste Schema verarbeitet. Stimmen die Prüfcodes überein, so ist die korrigierte zweite Botschaft in einem Schritt S9 validiert. Das Verfahren kehrt ebenfalls zum Schritt S4 zurück, um weitere Schemata zu verarbeiten. Alternativ kann hier abgebrochen und die validierte korrigierte Botschaft als das Ergebnis des Codelesens angesehen werden.

Wenn im Schritt S4 keine weiteren Schemata zur Verfügung stehen, wird die Schleife beendet und, dem nach rechts aus der Iteration ausbrechenden Pfeil der Figur 6 folgend, in einem Schritt S10 geprüft, ob die Validierung mit genau einem Schema erfolgreich war. In diesem Fall gilt die korrigierte Botschaft als validiert, sonst nicht. Nicht validiert ist die korrigierte Botschaft damit, wenn kein Schema eine Korrektur hervorgebracht hat. Vorzugsweise soll aber auch nicht passieren, dass gleich mehrere Schemata in eine korrigierte Botschaft mit passendem zweiten Prüfcode münden. Dann kam es zu einer Fehlerhäufung, es können nicht beide korrigierten Botschaften stimmen. Als Ausnahme sollte noch abgefangen werden, dass mehrere Schemata zufällig im Ergebnis dieselbe korrigierte Botschaft erzeugt haben, das ist dann doch keine Mehrdeutigkeit im Sinne des rechten Pfades aus Schritt S10.

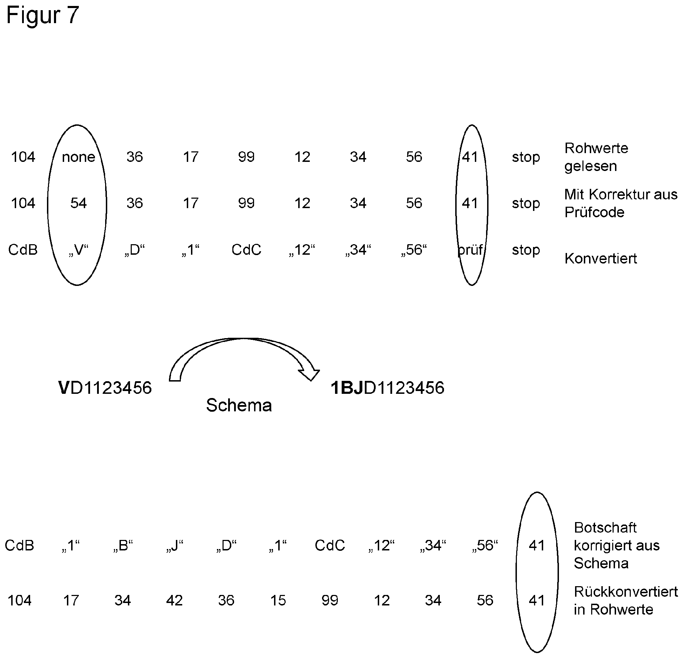

Figur 7 zeigt ein konkretes Beispiel eines gelesenen Codes zur Veranschaulichung der Korrektur und Validierung mittels Schemata. In der ersten Zeile des oberen Teils von Figur 7 sind die gelesenen Rohwerte gezeigt. An Position zwei konnte kein Rohwert bestimmt werden. In der zweiten Zeile wurde dieser Wert mit Hilfe des Prüfcodes auf 54 korrigiert. Das ist soweit lediglich die herkömmliche Korrektur aus einer Prüfziffer und, wie sich herausstellen wird, nicht die richtige Korrektur. In der dritten Zeile sind die Rohwerte dann nach dem Codierungsschema von Code128 in Nutzzeichen oder Klartext konvertiert. Dabei wird für die ersten Zeichen gemäß den Steuerzeichen CdB oder CodeB der Zeichensatz B verwendet, ab dann wird mittels CdC oder CodeC auf den Zeichensatz C umgeschaltet.

Im Mittelteil der Figur 7 wird die bisher resultierende Botschaft "VD1123456" mit einem passenden Schema zu "1BJD1123456" korrigiert. Zur Validierung dieser korrigierten Botschaft werden wie in der ersten Zeile des unteren Teils der Figur 7 die Steuerzeichen CdB und CdC aus der ursprünglichen Botschaft wieder eingefügt, weil Steuerzeichen in den Prüfcode eingehen. In der letzten Zeile wird die korrigierte Botschaft samt der Steuerzeichen in Rohwerte rückkonvertiert, wiederum nach den Regeln des Codierungsschemas von Code128 nun in umgekehrter Richtung. Daraus wird der zweite Prüfcode berechnet, der mit dem ursprünglich gelesenen ersten Prüfcode übereinstimmt und damit die korrigierte Botschaft validiert.

Zum besseren Verständnis wird abschließend noch erklärt, wie es überhaupt zu dem Fehlerfall in der zweiten Position der Figur 7 kommen kann. Hier wurde zunächst versucht, die zweite Position aus dem ersten Prüfcode zu korrigieren. Die tatsächliche Situation ist aber eine andere: Es wurde nicht nur ein einzelnes Zeichen nicht gelesen, tatsächlich fehlen an dieser Stelle durch Beschädigung gleich drei Zeichen. Eine Korrektur über Prüfcodes kann damit nicht zurechtkommen und war nicht die angemessene Umgangsweise. Hinzu kommt, dass die Korrektur über Prüfcodes den ursprünglichen Zweck des Prüfcodes außer Kraft setzt, denn natürlich passt der erste Prüfcode qua Konstruktion zu der gelesenen Botschaft, die Lücke wurde ja gerade aus dieser Bedingung gefüllt. Nur die erfindungsgemäße Korrektur und Validierung kann die fehlenden Zeichen über ihre Schemata ersetzen beziehungsweise ergänzen und auch nachweisen, dass dies die angemessene Korrektur gewesen ist.

## Patentansprüche

1. Verfahren zum Lesen eines optischen Codes (20), der eine Botschaft codiert, die eine Zeichenkette mit einer Vielzahl von Zeichen aufweist, mit den Schritten Aufnehmen von Bilddaten mit dem optischen Code (20),
Auswerten der Bilddaten mit Lesen der Botschaft einschließlich eines aus dem optischen Code gelesenen ersten Prüfcodes,
Vergleichen der gelesenen Zeichen der Botschaft mit mindestens einem Schema, das für mehrere Positionen der Botschaft ein Zeichen enthält, das in zu lesenden optischen Codes (20) an dieser Position erwartet wird,
und dann, wenn bei dem Vergleichen ein Mindestanteil der Zeichen des Schemas, insbesondere mindestens zwei Zeichen oder mindestens die Hälfte der Zeichen des Schemas, in der Botschaft wiedergefunden wird, Übernahme von Zeichen des Schemas, insbesondere aller Zeichen des Schemas, in die Botschaft,
**dadurch gekennzeichnet,**
**dass** nach einer Übernahme von Zeichen aus einem Schema in die Botschaft ein zweiter Prüfcode der mit dem Schema korrigierten Botschaft bestimmt wird, gemäß den Regeln des Codetyps des Codes (20), mit denen auch der erste Prüfcode berechnet wurde, und dass der erste Prüfcode mit dem zweiten Prüfcode verglichen wird, um die durch Übernahme von Zeichen aus dem Schema veränderte Botschaft zu validieren.

2. Verfahren nach Anspruch 1,
wobei der erste Prüfcode als richtig gelesen angesehen wird, wenn der erste Prüfcode innerhalb eines zulässigen Wertebereichs liegt, bei redundanter mehrfacher Lesung zumindest mehrheitlich derselbe erste Prüfcode resultiert und/oder wenn direkt benachbarte Zeichen des Prüfcodes gelesen wurden.

3. Verfahren nach Anspruch 1 oder 2,
wobei die Botschaft zunächst in Rohwerten aus optischen Elementen des optischen Codes (20) gelesen wird und wobei dann die Rohwerte anhand eines Codierungsschemas eines Codetyps in die Zeichen der Botschaft konvertiert werden.

4. Verfahren nach Anspruch 3,
wobei zur Bestimmung des zweiten Prüfcodes die Zeichen der Botschaft mit ihren aus einem Schema übernommenen Zeichen in Rohwerte konvertiert werden.

5. Verfahren nach Anspruch 3 oder 4,
wobei Steuerzeichen der gelesenen Rohwerte in der Bestimmung des zweiten Prüfcodes berücksichtigt werden.

6. Verfahren nach einem der vorhergehenden Ansprüche,
wobei für mehrere Schemata geprüft wird, ob ein Mindestanteil der Zeichen des Schemas in der Botschaft wiedergefunden wird, und wobei für jedes Schema, auf das dies zutrifft, probeweise Zeichen des Schemas in die Botschaft übernommen werden und zu der so korrigieren Botschaft ein zweiter Prüfcode bestimmt wird, und wobei dasjenige Schema und diejenige damit korrigierte Botschaft als validiert angesehen wird, deren zweiter Prüfcode mit dem ersten Prüfcode übereinstimmt.

7. Verfahren nach Anspruch 6,
wobei für den Fall, dass der zweite Prüfcode für mehr als ein Schema mit dem ersten Prüfcode übereinstimmt, die Botschaft nicht als validiert angesehen wird.

8. Optoelektronischer Codeleser (10) mit mindestens einem Lichtempfangselement (24) zur Erzeugung von Bilddaten aus Empfangslicht und mit einer Steuer- und Auswertungseinheit (26), in der ein Verfahren zum Lesen von optischen Codes (20) nach einem der vorhergehenden Ansprüche implementiert ist.

## Claims

1. A method of reading an optical code (20) that encodes a message which has a character chain having a plurality of characters, said method comprising the steps
recording image data having the optical code (20);
evaluating the image data by reading the message, including a first check code read from the optical code;
comparing the read characters of the message with at least one scheme which, for a plurality of positions of the message, contains a character that is expected at this position in optical codes (20) to be read;
and, when a minimum portion of the characters of the scheme, in particular at least two characters or at least half the characters of the scheme, are relocated in the message on the comparison, taking over characters of the scheme, in particular all the characters of the scheme, into the message,
**characterized in that**,
after a taking over of characters from a scheme into the message, a second check code of the message corrected with the scheme is determined, in accordance with the rules of the code type of the code (20) with which the first check code was also calculated, and **in that** the first check code is compared with the second check code to validate the message changed by taking over characters from the scheme.

2. A method according to claim 1,
wherein the first check code is considered as read correctly when the first check code is within a permitted value range, when the same first check code results in at least a majority of cases with a redundant multiple reading, and/or when directly adjacent characters of the check code were read.

3. A method according to claim 1 or 2,
wherein the message is first read in raw values from optical elements of the optical code (20), and wherein the raw values are then converted into the characters of the message using an encoding scheme of a code type.

4. A method according to claim 3,
wherein the characters of the message with their characters taken over from a scheme are converted into raw values to determine the second check code.

5. A method according to claim 3 or 4,
wherein control characters of the read raw values are considered in the determination of the second check code.

6. A method according to any one of the preceding claims,
wherein a check is made for a plurality of schemes whether a minimum portion of the characters of the scheme is relocated in the message, and
wherein characters of the scheme are taken over into the message experimentally for every scheme to which this applies and a second check code is determined with respect to the message thus corrected, and
wherein that scheme and that message corrected by it are considered validated whose second check code agrees with the first check code.

7. A method according to claim 6,
wherein, for the case that the second check code agrees with the first check code for more than one scheme, the message is considered as not validated.

8. An optoelectronic code reader (10) having at least one light reception element (24) for generating image data from received light and having a control and evaluation unit (26) in which a method of reading optical codes (20) in accordance with any one of the preceding claims is implemented.

## Revendications

1. Procédé de lecture d'un code optique (20) qui code un message comprenant une chaîne de caractères ayant une pluralité de caractères, comprenant les étapes consistant à :
enregistrer des données d'image comprenant le code optique (20),
évaluer les données d'image en lisant le message, y compris un premier code de contrôle lu à partir du code optique,
comparer les caractères lus du message à au moins un schéma qui comprend, pour plusieurs positions du message, un caractère qui est attendu à cette position dans les codes optiques (20) à lire,
puis, si lors de la comparaison, une proportion minimale des caractères du schéma, en particulier au moins deux caractères ou au moins la moitié des caractères du schéma, est retrouvée dans le message, adopter des caractères du schéma, en particulier tous les caractères du schéma, dans le message,
**caractérisé en ce que**
après une adoption de caractères d'un schéma dans le message, un deuxième code de contrôle du message corrigé par le schéma est déterminé selon les règles du type de code (20) selon lesquelles également le premier code de contrôle a été calculé, et
**en ce que** le premier code de contrôle est comparé au deuxième code de contrôle afin de valider le message modifié par l'adoption de caractères à partir du schéma.

2. Procédé selon la revendication 1,
dans lequel le premier code de contrôle est considéré comme correctement lu si le premier code de contrôle se situe dans une plage de valeurs admissible, si une lecture multiple redondante donne au moins majoritairement le même premier code de contrôle et/ou si des caractères directement adjacents du code de contrôle ont été lus.

3. Procédé selon la revendication 1 ou 2,
dans lequel le message est d'abord lu sous forme de valeurs brutes à partir d'éléments optiques du code optique (20), puis les valeurs brutes sont converties en caractères du message à l'aide d'un schéma de codage d'un type de code.

4. Procédé selon la revendication 3,
dans lequel, pour déterminer le deuxième code de contrôle, les caractères du message sont convertis en valeurs brutes avec leurs caractères adoptés à partir d'un schéma.

5. Procédé selon la revendication 3 ou 4,
dans lequel des caractères de commande des valeurs brutes lues sont pris en compte dans la détermination du deuxième code de contrôle.

6. Procédé selon l'une des revendications précédentes,
dans lequel il est vérifié, pour plusieurs schémas, si une proportion minimale des caractères du schéma est retrouvée dans le message, et, pour chaque schéma où cela est le cas, des caractères du schéma sont adoptés dans le message à titre d'essai, et un deuxième code de contrôle est déterminé pour le message ainsi corrigé, sachant que le schéma et le message ainsi corrigé, dont le deuxième code de contrôle correspond au premier code de contrôle, sont considérés comme validés.

7. Procédé selon la revendication 6,
dans lequel, dans le cas où le deuxième code de contrôle correspond au premier code de contrôle pour plus d'un schéma, le message n'est pas considéré comme validé.

8. Lecteur de codes optoélectronique (10) comprenant au moins un élément récepteur de lumière (24), destiné à générer des données d'image à partir de la lumière reçue, et une unité de commande et d'évaluation (26) dans laquelle est implémenté un procédé de lecture de codes optiques (20) selon l'une des revendications précédentes.
